(19) Europäisches Patentamt
European Patent Office
Office européen des brevets

(11) **EP 4 769 956 A1**

(12) **EUROPEAN PATENT APPLICATION**

(43) Date of publication:
**01.07.2026 Bulletin 2026/27**

(21) Application number: **25227723.1**

(22) Date of filing: **30.12.2025**

(51) International Patent Classification (IPC):
**H04B 1/18** (2006.01)    **H04B 1/401** (2015.01)

(52) Cooperative Patent Classification (CPC):
**H04B 1/18; H04B 1/401**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.12.2024 CN 202411998234**

(71) Applicant: **GUANGDONG OPPO MOBILE
TELECOMMUNICATIONS
CORP., LTD.
Dongguan, Guangdong 523860 (CN)**

(72) Inventors:
• **ZHAO, Xingrui**
  **Dongguan, Guangdong 523860 (CN)**
• **TONG, Lin**
  **Dongguan, Guangdong 523860 (CN)**

(74) Representative: **Novagraaf Technologies
2 rue Sarah Bernhardt
CS90017
92665 Asnières-sur-Seine Cedex (FR)**

(54) **RADIO FREQUENCY SYSTEM AND ELECTRONIC DEVICE**

(57)    A radio frequency system (100) and an electronic device (1000). The radio frequency system includes a radio frequency transceiver module (10), a radio frequency front-end module (20), at least one antenna radiator (30), and at least one first low-noise amplification module (40). The radio frequency front-end module includes at least one transmission path (21) and at least one reception path (22). The transmission path is electrically connected to the radio frequency transceiver module, and the reception path is electrically connected to the radio frequency transceiver module. The first low-noise amplification module is connected between the antenna radiator and the reception path. When the first low-noise amplification module is in a first working state, it is conductive between the antenna radiator and the reception path, and when the first low-noise amplification module is in a first bypass state, it is short-circuited between the antenna radiator and the reception path.

100

FIG. 3

**Description**

**TECHNICAL FIELD**

The present disclosure relates to the field of communication technologies, and specifically, to a radio frequency (RF) system and an electronic device.

**BACKGROUND**

With the development of communication technologies, the sensitivity of the reception path in the RF circuit of an electronic device is critically important. The sensitivity of the reception path in the RF circuit directly affects the performance of the receiver and the quality of communication. Reception sensitivity refers to the ability of a receiver to detect the weakest signal under normal communication conditions, serving as a key indicator of receiver performance. An increase in path insertion loss can lead to degraded sensitivity performance, which contradicts the goal of improving sensitivity and is detrimental to optimizing the user experience. Therefore, how to enhance the sensitivity of the reception path in the RF system of an electronic device has become a technical problem that needs to be addressed.

**SUMMARY OF THE DISCLOSURE**

The present disclosure provides a radio frequency system for improving the sensitivity of a receiving path of a radio frequency system of an electronic device and an electronic device having the radio frequency system.

In a first aspect, a radio frequency system provided in the present disclosure includes:

a radio frequency transceiver module;
a radio frequency front-end module, comprising at least one transmission path and at least one reception path; wherein an end of each transmission path is electrically connected to a corresponding transmission port of the radio frequency transceiver module, and an end of each reception path is electrically connected to a corresponding reception port of the radio frequency transceiver module;
at least one antenna radiator; and
at least one first low-noise amplification module; wherein each first low-noise amplification module is connected between a corresponding antenna radiator and a corresponding reception path; in a case where the first low-noise amplification module is in a first working state, the first low-noise amplification module is conductive between the corresponding antenna radiator and the corresponding reception path; in a case where the first low-noise amplification module is in a first bypass state, the first low-noise amplification module is short-circuited between the corresponding antenna radiator and the corresponding reception path.

In a second aspect, an electronic device provided in the present disclosure includes the radio frequency system according to the first aspect.

The radio frequency system provided in the present disclosure includes a radio frequency transceiver module, a radio frequency front-end module, at least one antenna radiator, and at least one first low-noise amplification module. The radio frequency front-end module includes at least one transmission path and at least one reception path. An end of the transmission path is electrically connected to a transmission port of the radio frequency transceiver module, and an end of the reception path is electrically connected to a reception port of the radio frequency transceiver module. The first low-noise amplification module is connected between the antenna radiator and the reception path. When the first low-noise amplification module is in a first operating state, the first low-noise amplification module is conductive between the antenna radiator and the reception path. When the first low-noise amplification module is in a first bypass state, the first low-noise amplification module is short-circuited between the antenna radiator and the reception path. This facilitates, in the first operating state, reducing the noise figure by arranging the first low-noise amplification module close to the antenna radiator, thereby improving the signal sensitivity of the reception path.

**BRIEF DESCRIPTION OF THE DRAWINGS**

To more clearly illustrate the technical solutions of the embodiments of the present disclosure, the drawings required for describing the embodiments are briefly introduced below.

FIG. 1 is a structural schematic view of an electronic device according to some embodiments of the present disclosure.
FIG. 2 is a partially exploded schematic view of an electronic device according to some embodiments of the present disclosure.

FIG. 3 is a structural schematic diagram of an electronic device according to some embodiments of the present disclosure.

FIG. 4 is a first schematic architectural diagram of a radio frequency system according to some embodiments of the present disclosure.

FIG. 5 is a second schematic architectural diagram of a radio frequency system according to some embodiments of the present disclosure.

FIG. 6 is a third schematic architectural diagram of a radio frequency system according to some embodiments of the present disclosure.

FIG. 7 is a fourth schematic architectural diagram of a radio frequency system according to some embodiments of the present disclosure.

FIG. 8 is a fifth schematic architectural diagram of a radio frequency system according to some embodiments of the present disclosure.

FIG. 9 is a sixth schematic architectural diagram of a radio frequency system according to some embodiments of the present disclosure.

FIG. 10 is a seventh schematic architectural diagram of a radio frequency system according to some embodiments of the present disclosure.

FIG. 11 is an eighth schematic architectural diagram of a radio frequency system according to some embodiments of the present disclosure.

FIG. 12 is a ninth schematic architectural diagram of a radio frequency system according to some embodiments of the present disclosure.

FIG. 13 is a tenth schematic architectural diagram of a radio frequency system according to some embodiments of the present disclosure.

FIG. 14 is an eleventh schematic architectural diagram of a radio frequency system according to some embodiments of the present disclosure.

FIG. 15 is a schematic view of a back side of an electronic device, with a rear cover removed, according to some embodiments of the present disclosure.

FIG. 16 is a twelfth schematic architectural diagram of a radio frequency system according to some embodiments of the present disclosure.

Reference Numerals:

Electronic device: 1000; Radio frequency system: 100; Display screen: 200; Middle frame: 300; Rear cover: 400; Middle plate: 310; Bezel: 320; Mainboard: 600; Battery: 700; Sub-board: 800; RF transceiver module: 10; RF front-end module: 20; Antenna radiator: 30; First low-noise amplification module: 40; RF transmission port: Tx; RF reception port: Rx; Transmission path: 21; Reception path: 22; First bypass trace: 51; Second low-noise amplification module: 221; First filter: 222; Power amplification module: 211; Second filter: 212; First antenna switch: 61; First fixed terminal: a1; First selection terminal: b1; Second selection terminal: b2; Third bypass trace: 53; Second bypass trace: 52; First front-end switch: 71; Second front-end switch: 72; First back-end switch: 81; Second back-end switch: 82; First reception sub-path: 22a; Second reception sub-path: 22b; First low-noise amplification sub-module: 221a; First sub-filter: 222a; First back-end sub-switch: 82a; First back-end sub-trace: 52a; Second low-noise amplification sub-module: 221b; Second sub-filter: 222b; First back-end sub-switch: 81a; Second back-end sub-switch: 82b; Second back-end sub-trace: 52b; First reception port: Rx1; Third selection terminal: b3; Third front-end sub-switch: 71a; Fourth front-end sub-switch: 71b; First front-end sub-switch: 72a; Second front-end sub-switch: 72b; First front-end sub-trace: 51a; Second front-end sub-trace: 51b; First sub-radiator: 30a; Second sub-radiator: 30b; First low-noise amplification sub-module: 40a; Second low-noise amplification sub-module: 40b; Third reception sub-path: 22c; Fourth reception sub-path: 22d; Third sub-radiator: 30c; Fourth sub-radiator: 30d; Third low-noise amplification sub-module: 40c; Fourth low-noise amplification sub-module: 40d; Second antenna switch: 62; First front-end sub-switch: 71c; Second front-end sub-switch: 71d; Third sub-filter: 222c; Third low-noise amplification sub-module: 221c; Fourth sub-filter: 222d; Fourth low-noise amplification sub-module: 221d; Third front-end sub-trace: 51c; Fourth front-end sub-trace: 51d; Third back-end sub-trace: 52c; Fourth back-end sub-trace: 52d; Third back-end sub-switch: 82c; Fourth back-end sub-switch: 82d; Fourth reception port: Rx4; Fourth selection terminal: b4; Fifth selection terminal: b5; Sixth selection terminal: b6.

## DETAILED DESCRIPTION

The technical solutions in the embodiments of the present disclosure will be clearly and completely described below with reference to the accompanying drawings. Obviously, the described embodiments are only a part, not all, of the embodiments of the present disclosure. All other embodiments obtained by those skilled in the art based on the embodiments of the present disclosure without creative efforts shall fall within the scope of the present disclosure.

Mentioning "some embodiments" in the present disclosure means that a specific feature, structure, or characteristic described in connection with the embodiment may be included in at least one embodiment of the present disclosure. The appearance of this phrase in various places in the specification does not necessarily all refer to the same embodiment, nor is it some embodiments that is mutually exclusive with or alternative to other embodiments. Those skilled in the art will explicitly and implicitly understand that the embodiments described in the present disclosure may be combined with other embodiments.

The terms "first", "second", etc., in the specification and claims of the present disclosure and the above drawings are intended to distinguish between different objects and not to describe a specific order. Furthermore, the terms "include", "include", "have", and any variations thereof, are intended to cover a non-exclusive inclusion. For example, a component or device that includes a series of components is not limited to those listed components, but may optionally further include components not listed, or other components inherent to the component or device, or components that the component or device must have based on its function.

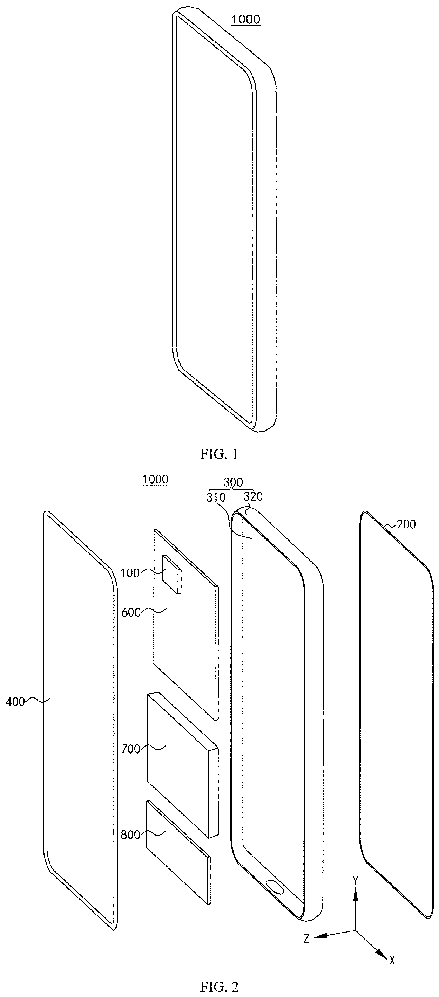

Referring to FIG. 1, FIG. 1 is a structural schematic view of an electronic device 1000 according to some embodiments of the present disclosure. The electronic device 1000 includes, but is not limited to, a mobile phone, tablet computer, laptop computer, computer, wearable device, unmanned aerial vehicle, robot, digital camera, and other devices with communication functions. The embodiments take a mobile phone as an example for description. Other electronic devices may refer to the instant embodiments.

Referring to FIG. 2, FIG. 2 is a partially exploded schematic view of the electronic device 1000 according to some embodiments of the present disclosure. The working environment of a radio frequency system 100 is illustrated by taking the electronic device 1000 as a mobile phone. The electronic device 1000 includes a display screen 200, a middle frame 300, and a rear cover 400 sequentially arranged along a thickness direction. The middle frame 300 includes a middle plate 310 and a bezel 320 surrounding a periphery of the middle plate 310. The bezel 320 is a conductive bezel, such as a metal bezel. Accommodation spaces are defined between the display screen 200 and the middle plate 310, and between the middle plate 310 and the rear cover 400, to accommodate components such as a mainboard 600, camera module, receiver module, a battery 700, a sub-board 800, and various sensors. A side of the bezel 320 along the thickness direction is connected to an edge of the display screen 200, and the other side of the bezel 320 along the thickness direction is connected to an edge of the rear cover 400, forming the complete appearance structure of the electronic device 1000. In the embodiments, the bezel 320 and the middle plate 310 are an integrated structure, and the bezel 320 and the rear cover 400 are separate structures. The above describes the working environment of the radio frequency system 100 taking a mobile phone as an example, but the radio frequency system 100 of the present disclosure is not limited to the above working environment.

The following describes the sensitivity of the reception path of the radio frequency system 100 in conjunction with the drawings.

Reception sensitivity refers to the weakest signal that a receiver can receive under normal communication conditions. Poor sensitivity will reduce the coverage range of the device and affect the stability and reliability of communication. Reception sensitivity is a key indicator for measuring the strength of a mobile phone signal.

Reception sensitivity calculation formula:

$$\text{Sensitivity(dBm)} = -174\text{dBm/Hz} + \text{NF} + 10*\log(\text{BW}) + \text{SNR}.$$

Among them: -174 dBm/Hz refers to the thermal noise at room temperature (25°C), where the thermal noise increases at high temperatures, leading to worse sensitivity; NF refers to the noise figure of the receiver; 10*log(BW) is the logarithm of the bandwidth, theoretically, each time the test bandwidth doubles, the sensitivity decreases by 3 dB; SNR refers to the minimum signal-to-noise ratio that the receiver can demodulate. The minimum SNR reference value under NR QPSK is -1.

The noise figure (NF) of the receiver is a ratio of the signal-to-noise ratio of the input signal to the signal-to-noise ratio of the output signal. The NF in the sensitivity calculation formula refers to the total noise from the antenna to the output port of the demodulator in the entire reception circuit. Therefore, it is necessary to make the noise figure of each stage in the signal link as low as possible.

The formula for the noise figure NF is:

$$\text{NF} = 10 \log \text{F} \qquad\qquad (1)$$

Among them: F refers to a noise factor, and F=SNRi/SNRo, where SNRi is the signal-to-noise ratio of the input signal, and SNRo is the signal-to-noise ratio of the output signal. That is, F is the ratio of the signal-to-noise ratio of the input signal to the signal-to-noise ratio of the output signal.

The cascade formula of the noise factor is as follows:

$$F = F1 + \frac{F2-1}{G1} + \frac{F3-1}{G1G2} + \frac{F4-1}{G1G2G3} + \cdots + \frac{Fn-1}{G1G2\ldots Gn} \qquad (2)$$

Among them: *Fn* refers to the noise factor of the nth stage circuit, and *Gn* refers to a gain factor (in times) of the nth stage circuit. It can be seen from the formula that the key to reducing the system noise figure is to reduce the noise factor of the first few stages. The noise factor of the first stage has the greatest impact on the overall noise factor.

The following describes the specific architecture of the radio frequency system 100 in conjunction with the drawings.

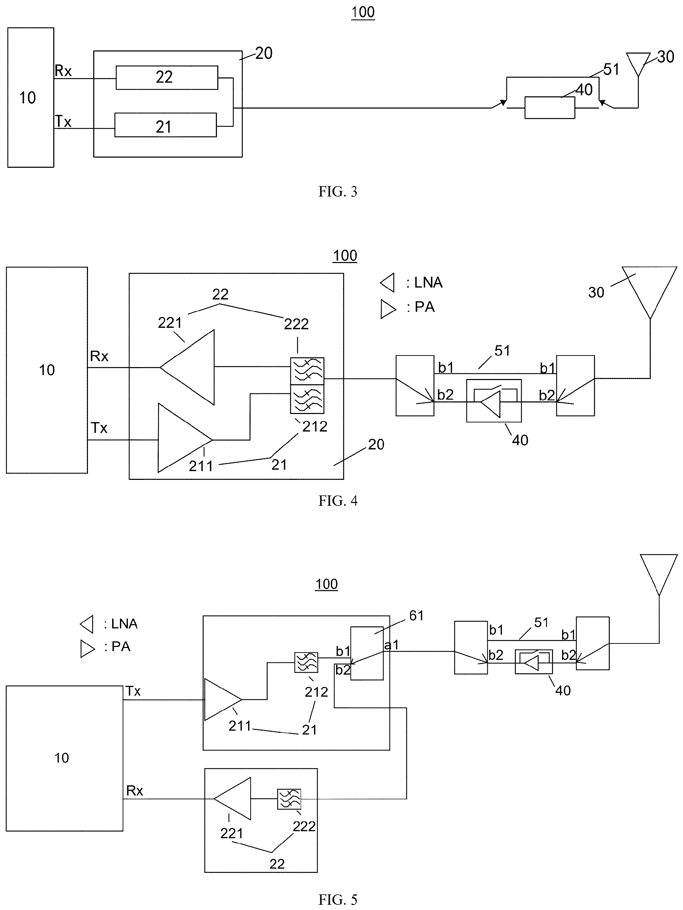

Referring to FIG. 3, the radio frequency system 100 includes an RF transceiver module 10, an RF front-end module 20, at least one antenna radiator 30, and at least one first low-noise amplification module 40.

In some embodiments, the RF transceiver module 10 is an RF transceiver.

The RF transceiver module 10 includes a transmitter and a receiver. The transmitter is configured to process the baseband modulated signal through upconversion, amplification, filtering, etc., to move the baseband modulated signal to radio frequency and then transmit the resulted RF signal through the antenna radiator 30. The receiver is configured to receive a weak RF signal from space via the antenna radiator 30, and then process the RF signal through filtering, amplification, downconversion, etc., to obtain a baseband signal, which is finally sent to a demodulation module for demodulation.

The RF front-end module 20 is electrically connected between the RF transceiver module 10 and the antenna radiator 30.

In some embodiments, the RF transceiver module 10 and the RF front-end module 20 may be independent chips, that is, the front-end module 20 is an external module.

Alternatively, the RF transceiver module 10 and the RF front-end module 20 may be integrated into one chip, that is, the front-end module 20 is a built-in module.

The RF front-end module 20 is configured to complete transmission amplification and reception amplification of RF signals, and even includes power detection, control, switching, etc.

Referring to FIG. 3, the RF transceiver module 10 includes at least one RF transmission port Tx and at least one RF reception port Rx.

Referring to FIG. 3, the RF front-end module 20 includes at least one transmission path 21 and at least one reception path 22. The instant embodiments take one RF transmission port Tx and multiple RF reception ports Rx as an example, and one transmission path 21 and multiple reception paths 22 as an example.

In this implementation, an end of each transmission path 21 is electrically connected to a corresponding transmission port Tx of the RF transceiver module 10, and an end of each reception path 22 is electrically connected to a corresponding reception port Rx of the RF transceiver module 10.

The first low-noise amplification module 40 is connected between the antenna radiator 30 and the reception path 22. The first low-noise amplification module 40 includes at least a low-noise amplifier.

When the first low-noise amplification module 40 is in a first working state, the first low-noise amplification module 40 is conductive between the antenna radiator 30 and the reception path 22.

When the first low-noise amplification module 40 is in a first bypass state, the first low-noise amplification module 40 is short-circuited between the antenna radiator 30 and the reception path 22.

Specifically, referring to FIG. 3, the radio frequency system 100 further includes a first bypass trace 51. The first bypass trace 51 is connected in parallel with the first low-noise amplification module 40. Either the first bypass trace 51 or the first low-noise amplification module 40 can be selected to be conductive between the antenna radiator 30 and the reception path 22.

In some embodiments, in a first reception state of the antenna radiator 30 (e.g., low interference signal), the radio frequency system 100 switches to the first low-noise amplification module 40 being conductive between the antenna radiator 30 and the reception path 22, and the first low-noise amplification module 40 is in the first working state.

Since the first low-noise amplification module 40 is located close to the antenna radiator 30, on the signal reception link, the first low-noise amplification module 40 is configured to form a first-stage noise factor. According to the aforementioned cascade formula of the noise factor, when the first low-noise amplification module 40 is located close to the antenna radiator 30, the first-stage noise factor can be made smaller, thereby making the overall noise factor smaller. According to the aforementioned sensitivity formula, reducing the noise factor can improve the sensitivity on the reception path 22 of the radio frequency system 100.

In some embodiments, in a second reception state of the antenna radiator 30 (e.g., relatively high interference signal), the radio frequency system 100 switches to the first bypass trace 51 being conductive between the antenna radiator 30 and the reception path 22, and the first low-noise amplification module 40 is in the first bypass state, to prevent the power of the first low-noise amplification module 40 from being easily saturated, which could cause power non-linearity and lead to reduced sensitivity.

The first low-noise amplification module 40 may be part of the RF front-end module 20; or, the first low-noise amplification module 40 may be a chip, a module, or a circuit independent of the RF front-end module 20.

The radio frequency system 100 provided in the present disclosure includes an RF transceiver module 10, an RF front-end module 20, at least one antenna radiator 30, and at least one first low-noise amplification module 40. The RF front-end module 20 includes at least one transmission path 21 and at least one reception path 22. An end of the transmission path 21 is electrically connected to the transmission port of the RF transceiver module 10, and an end of the reception path 22 is electrically connected to the reception port of the RF transceiver module 10. The first low-noise amplification module 40 is connected between the antenna radiator 30 and the reception path 22. When the first low-noise amplification module 40 is in a first working state, the first low-noise amplification module 40 is conductive between the antenna radiator 30 and the reception path 22. When the first low-noise amplification module 40 is in a first bypass state, the first low-noise amplification module 40 is short-circuited between the antenna radiator 30 and the reception path 22. This may facilitate, in the first working state, reducing the noise figure by placing the first low-noise amplification module 40 close to the antenna radiator 30, thereby improving the signal sensitivity of the reception path 22.

When the radio frequency system 100 supports FDD frequency bands, the first low-noise amplification module 40 is in the first bypass state. The FDD frequency bands refer to different frequency ranges used in Frequency Division Duplexing (FDD) technology. The FDD technology enables bidirectional communication by using two separate frequencies for the uplink (device to base station) and downlink (base station to device). The FDD frequency bands include, but are not limited to, B1, B3, B5, B20, B28, or any combination thereof.

Specifically, the reception path 22 and the transmission path 21 share a path including the first bypass trace 51 and the first low-noise amplification module 40 to be electrically connected to the antenna radiator 30. At this time, the radio frequency system 100 switches to the first bypass trace 51 being conductive between the antenna radiator 30 and the reception path 22, and the first low-noise amplification module 40 is in the first bypass state, to ensure that the antenna radiator 30 can simultaneously operate in both the transmission and reception frequency bands.

In an implementation, referring to FIG. 4, the reception path 22 includes a second low-noise amplification module 221 and a first filter 222. The transmission path 21 includes a power amplification module 211 and a second filter 212. The first filter 222 and the second filter 212 form a duplexer.

An end of the second low-noise amplification module 221 is electrically connected to a reception port of the RF transceiver module 10, and the other end of the second low-noise amplification module 221 is electrically connected to a signal output end of the duplexer.

An end of the power amplification module 211 is electrically connected to a transmission port of the RF transceiver module 10, and the other end of the power amplification module 211 is electrically connected to a signal input end of the duplexer.

The combined port of the duplexer can be selectively electrically connected to the first bypass trace 51 leading to the antenna radiator 30, meaning that the first low-noise amplification module 40 is in the first bypass state. Electrical connection in the present disclosure may be a direct adjacent electrical connection or an indirect electrical connection through other components.

When the radio frequency system 100 supports FDD frequency bands, during signal transmission, the transmission frequency band from the transmission port of the RF transceiver module 10 passes sequentially through the power amplification module 211, a part (i.e., the second filter 212) of the duplexer, and the first bypass trace 51 to reach the antenna radiator 30.

When the radio frequency system 100 supports FDD frequency bands, during signal reception, the reception frequency band received by the antenna radiator 30 passes sequentially through the first bypass trace 51, a part (i.e., the first filter 222) of the duplexer, and the second low-noise amplification module 221 to reach the reception port of the RF transceiver module 10.

In another implementation, referring to FIG. 5, the radio frequency system 100 further includes a first antenna switch 61.

Referring to FIG. 5, a first fixed terminal a1 of the first antenna switch 61 can be selectively electrically connected to the first bypass trace 51 or the first low-noise amplification module 40 leading to the antenna radiator 30. A first selection terminal b1 of the first antenna switch 61 is electrically connected to the transmission path 21. A second selection terminal b2 of the first antenna switch 61 is electrically connected to the reception path 22.

When the radio frequency system 100 supports TDD frequency bands and is transmitting antenna signals, the first fixed terminal a1 of the first antenna switch 61 is electrically connected to the first selection terminal b1, the first low-noise amplification module 40 is in the first bypass state, the radio frequency system 100 switches to the first bypass trace 51 being conductive between the antenna radiator 30 and the reception path 22, thereby facilitating the transmission of antenna signals.

When the radio frequency system 100 supports TDD frequency bands and is receiving antenna signals, the first fixed terminal a1 of the first antenna switch 61 is electrically connected to the second selection terminal b2, the first low-noise amplification module 40 is in the first working state, the radio frequency system 100 switches to the first low-noise amplification module 40 being conductive between the antenna radiator 30 and the reception path 22, thereby facilitating the reception of antenna signals.

The TDD frequency bands refer to frequency ranges used in Time Division Duplex (TDD) technology in wireless communications. The TDD technology distinguishes between uplink and downlink transmissions using time, employing different time slots of the same carrier frequency for data transmission and reception. The TDD frequency bands include, but are not limited to, B34, B39, B38, B40, B41, N77, N78, N79, or any combination thereof.

The present disclosure does not specifically limit the frequency bands of the antenna signals on which the radio frequency system 100 operates. In some embodiments, the operating frequency bands of the radio frequency system 100 include, but are not limited to, cellular radio frequency 2G/3G/4G/5G/Sub-6GHz, short-range (Wi-Fi) bands, etc.

When the radio frequency system 100 supports TDD frequency bands and is receiving antenna signals, and the interference signal strength is less than or equal to a first preset strength, the first low-noise amplification module 40 is in the first working state.

The present disclosure does not specify the first preset strength. The first preset strength may be the signal strength that drives the first low-noise amplification module 40 into saturation. When the first low-noise amplification module 40 is saturated, its linearity is poor, and signal reception sensitivity decreases.

Specifically, when issues such as poor isolation between the transmission path 21 and the reception path 22, or frequent switch switching occur in the radio frequency system 100, they can easily generate out-of-band spurious interference signals. Based on this, the radio frequency system 100 may include an interference signal detector. The interference signal detector is electrically connected to a position on the reception path 22 near the antenna radiator 30 and is configured to detect whether the strength of the interference signal in the signal received by the reception path 22 is less than or equal to the first preset strength. When the interference signal detector detects that the interference signal strength is less than or equal to the first preset strength, the radio frequency system 100 switches to the first low-noise amplification module 40 being conductive between the reception path 22 and the antenna radiator 30, placing the first low-noise amplification module 40 in the first working state.

When the first low-noise amplification module 40 is in the first working state, the antenna signal received by the antenna radiator 30 is first amplified by the first low-noise amplification module 40. Because the first low-noise amplification module 40 has a small noise factor and is located at the position of the first-stage noise factor on the signal reception link, according to the aforementioned noise factor cascade formula, the overall noise factor of the entire signal reception link is reduced. According to the sensitivity formula, reducing the noise factor improves the sensitivity of the reception path 22 of the radio frequency system 100.

Furthermore, since the interference signal strength is less than or equal to the first preset strength, indicating the interference is relatively weak and its power linearity is good, the first low-noise amplification module 40 can operate in amplification mode without being easily saturated. This may facilitate low-noise amplification of the antenna signal by the first low-noise amplification module 40 and improve the sensitivity of the reception path 22 of the radio frequency system 100.

In some embodiments, the first low-noise amplification module 40 has a first gain mode and a second gain mode.

The operating gain of the second gain mode is greater than the operating gain of the first gain mode.

In some embodiments, the first low-noise amplification module 40 includes multiple stages of amplification circuits connected in series.

For example, the first gain mode is a single-stage gain. Single-stage gain includes, but is not limited to, enabling (i.e., causing the circuit to be connected) the first stage amplification circuit and disabling (i.e., causing the circuit to be disconnected) or short-circuiting the amplification circuits after the first stage amplification circuit.

For example, the second gain mode is a two-stage gain. Two-stage gain includes, but is not limited to, enabling the first and second stage amplification circuits and disabling or short-circuiting the amplification circuits after the second stage amplification circuit.

Of course, in other implementations, the first gain mode may be single-stage and the second gain mode may be three-stage. In yet other implementations, the first gain mode may be two-stage and the second gain mode may be three-stage.

When the radio frequency system 100 supports TDD frequency bands and is receiving antenna signals, and the interference signal strength is less than or equal to the first preset strength, the first low-noise amplification module 40 operates in the second gain mode, allowing it to amplify the received signal from the antenna radiator 30 with a higher gain factor.

As mentioned earlier, referring to FIGS. 4 and 5, the reception path 22 includes at least one second low-noise amplification module 221. An end of the second low-noise amplification module 221 is electrically connected to the reception port of the RF transceiver module 10, and the other end of the second low-noise amplification module 221 is electrically connected to an end of the first low-noise amplification module 40 away from the antenna radiator 30.

In some embodiments, the first low-noise amplification module 40 is located outside the RF front-end module 20 and close to the antenna radiator 30. The second low-noise amplification module 221 is located inside the RF front-end module 20.

The first low-noise amplification module 40 and the second low-noise amplification module 221 may operate switchably or simultaneously when the radio frequency system 100 is receiving signals.

When the first low-noise amplification module 40 is in the first working state, the second low-noise amplification module 221 is in a second working state or a second bypass state. The second working state of the second low-noise amplification module 221 includes, but is not limited to, the second low-noise amplification module 221 being electrically connected between the reception port of the RF transceiver module 10 and the first low-noise amplification module 40.

In some embodiments, referring to FIGS. 4 and 5, the reception path 22 further includes at least one first filter 222. The first filter 222 is electrically connected between the second low-noise amplification module 221 and the first low-noise amplification module 40. The second working state of the second low-noise amplification module 221 includes, but is not limited to, the second low-noise amplification module 221 being electrically connected between the reception port of the RF transceiver module 10 and the first filter 222. The first filter 222 is configured to allow the reception frequency band of the antenna signal to pass.

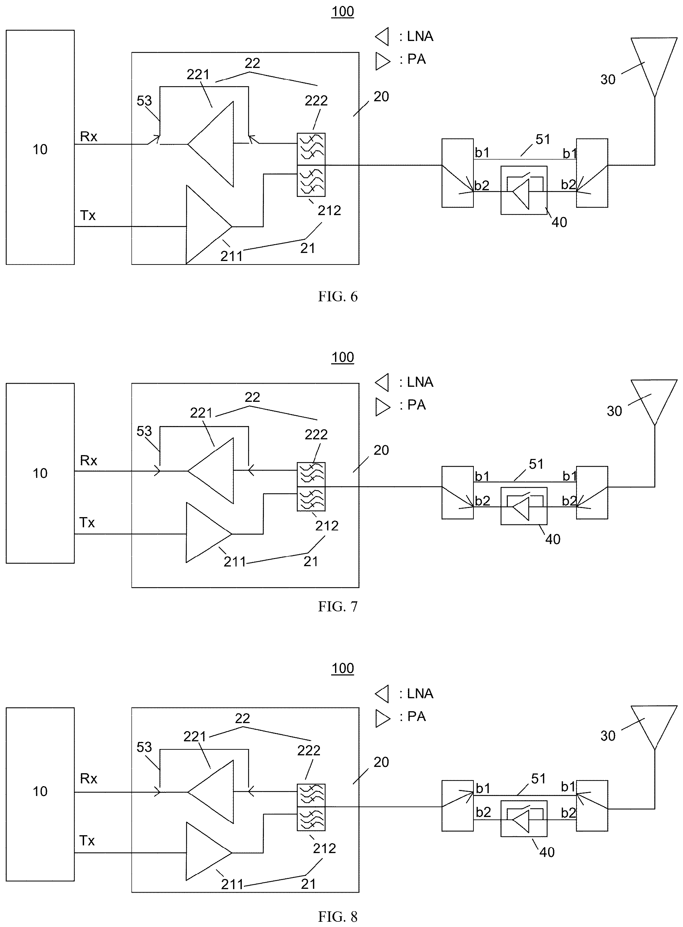

In some embodiments, referring to FIG. 6, the reception path 22 further includes a third bypass trace 53. The third bypass trace 53 is connected in parallel with the second low-noise amplification module 221. Either the third bypass trace 53 or the second low-noise amplification module 221 can be selected to be conductive between the reception port of the RF transceiver module 10 and the first filter 222.

In an implementation, referring to FIG. 7, when the first low-noise amplification module 40 is in the first working state, the reception path 22 switches to the second low-noise amplification module 221 being conductive between the reception port of the RF transceiver module 10 and the first filter 222, and the second low-noise amplification module 221 is in the second working state.

In this implementation, the antenna signal received by the antenna radiator 30 passes sequentially through the first low-noise amplification module 40 and the second low-noise amplification module 221 for low-noise amplification, which helps improve the received signal strength and sensitivity.

In another implementation, referring to FIG. 6, when the first low-noise amplification module 40 is in the first working state, the reception path 22 switches to the third bypass trace 53 being conductive between the reception port of the RF transceiver module 10 and the first filter 222. The second low-noise amplification module 221 is short-circuited by the third bypass trace 53 and is not electrically connected between the reception port of the RF transceiver module 10 and the first filter 222. The second low-noise amplification module 221 is in the second bypass state.

In this implementation, the second low-noise amplification module 221 is short-circuited by the third bypass trace 53. The antenna signal received by the antenna radiator 30 sequentially passes through the first low-noise amplification module 40 for low-noise amplification. This is beneficial for improving reception sensitivity while eliminating the need to simultaneously supply power to both the first low-noise amplification module 40 and the second low-noise amplification module 221, thereby reducing power consumption.

Referring to FIG. 8, when the first low-noise amplification module 40 is in the first bypass state, the reception path 22 is switched such that the second low-noise amplification module 221 is conductive between the reception port of the RF transceiver module 10 and the first filter 222. The second low-noise amplification module 221 is in the second working state. In this case, the second low-noise amplification module 221 can perform low-noise amplification on the antenna signal received by the antenna radiator 30.

This implementation may occur when the radio frequency system 100 operates in an FDD frequency band. Because the path between the RF front-end module 20 and the antenna radiator 30 needs to simultaneously transmit and receive the FDD frequency band, it is necessary to set the first low-noise amplification module 40 to the first bypass state, with the first bypass trace 51 conductive between the RF front-end module 20 and the antenna radiator 30. In this case, by switching the reception path 22 such that the second low-noise amplification module 221 is conductive between the reception port of the RF transceiver module 10 and the first filter 222, low-noise amplification can be performed on the antenna signal received by the antenna radiator 30 without affecting the transmission signal.

In some embodiments, when the radio frequency system 100 supports TDD frequency bands and is receiving an antenna signal, and the interference signal strength is less than or equal to the first preset strength, the first filter 222 is in a third bypass state.

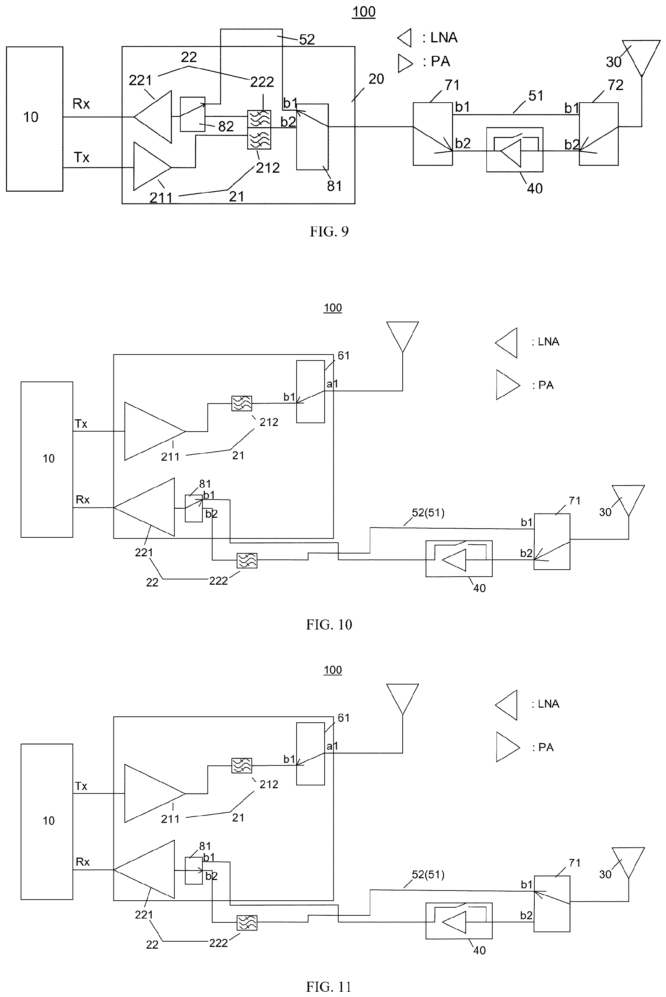

In some embodiments, referring to FIG. 9, the reception path 22 further includes a second bypass trace 52. The second bypass trace 52 is connected in parallel with the first filter 222. Either the second bypass trace 52 or the first filter 222 can be selected to be conductive between the second low-noise amplification module 221 and the antenna radiator 30; or, the second bypass trace 52 or the first filter 222 can be selected to be conductive between the second low-noise amplification module 221 and an end of the first low-noise amplification module 40 away from the antenna radiator 30.

Referring to FIG. 9, when the first filter 222 is short-circuited by the second bypass trace 52, and the second bypass trace 52 is conductive between the second low-noise amplification module 221 (or the reception port of the RF transceiver module 10) and the antenna radiator 30, the first filter 222 is in the third bypass state.

In this implementation, when the radio frequency system 100 supports TDD frequency bands and is receiving an antenna signal, and the interference signal strength is less than or equal to the first preset strength, it indicates that the received interference signal strength is relatively low. In this case, the first low-noise amplification module 40 can be in the first working state, and the first filter 222 can be in the third bypass state. Thus, the received antenna signal does not need to pass through the first filter 222, thereby reducing the insertion loss caused by the first filter 222. Insertion loss directly affects the power loss of the signal; greater insertion loss leads to more signal power loss and a corresponding decrease in SNR, thereby affecting communication quality. According to the sensitivity formula, reducing insertion loss can increase the SNR, thereby improving the reception sensitivity of the radio frequency system 100.

In some embodiments, referring to FIG. 9, when the radio frequency system 100 supports TDD frequency bands and is receiving an antenna signal, and the interference signal strength is greater than the first preset strength, the first low-noise amplification module 40 is in the first bypass state, and the first filter 222 is in a third working state.

Specifically, when the interference signal detector detects that the interference signal strength in the signal received by the reception path 22 is greater than the first preset strength, the radio frequency system 100 switches to the first bypass trace 51 being conductive between the reception path 22 and the antenna radiator 30, placing the first low-noise amplification module 40 in the first bypass state. In addition, the radio frequency system 100 switches to the first filter 222 being conductive between the second low-noise amplification module 221 (or the reception port of the RF transceiver module 10) and the first bypass trace 51, placing the first filter 222 in the third working state.

In this implementation, when the radio frequency system 100 supports TDD frequency bands and is receiving an antenna signal, and the interference signal strength is greater than the first preset strength, it indicates that the received interference signal strength is relatively high. In this case, by setting the first low-noise amplification module 40 to the first bypass state, saturation of the first low-noise amplification module 40 can be avoided. Furthermore, the first filter 222 filters the received interference signal to prevent saturation of the second low-noise amplification module 221. In this case, the second low-noise amplification module 221 can perform low-noise amplification on the received antenna.

Referring to FIG. 9, in a first implementation where the first bypass trace 51 and the first low-noise amplification module 40 are switchably conductive between the reception path 22 and the antenna radiator 30, the radio frequency system 100 further includes a first front-end switch 71, the first bypass trace 51, and a second front-end switch 72.

A fixed terminal of the first front-end switch 71 is electrically connected to the antenna radiator 30. A first selection terminal b1 of the first front-end switch 71 is electrically connected to an end of the first bypass trace 51. A second selection terminal b2 of the first front-end switch 71 is electrically connected to an end of the first low-noise amplification module 40. The other end of the first bypass trace 51 is electrically connected to a first selection terminal b1 of the second front-end switch 72. The other end of the first low-noise amplification module 40 is electrically connected to a second selection terminal b2 of the second front-end switch 72. A fixed terminal of the second front-end switch 72 is electrically connected to the RF front-end module 20.

The radio frequency system 100 may further include a control module. The control module may be part of the RF front-end module 20; or, the control module may be a chip, module, or circuit independent of the RF front-end module 20. The control module is configured to control the on/off state of switches such as the first front-end switch 71 and the second front-end switch 72.

When the fixed terminal of the first front-end switch 71 is conductive with the first selection terminal b1, and the fixed terminal of the second front-end switch 72 is conductive with the first selection terminal b1, the first bypass trace 51 is conductive between the RF front-end module 20 and the antenna radiator 30, and the first low-noise amplification module 40 is in the first bypass state.

When the fixed terminal of the first front-end switch 71 is conductive with the second selection terminal b2, and the fixed terminal of the second front-end switch 72 is conductive with the second selection terminal b2, the first low-noise amplification module 40 is conductive between the RF front-end module 20 and the antenna radiator 30, and the first low-noise amplification module 40 is in the first working state.

Referring to FIG. 9, in a first implementation where the second bypass trace 52 and the first filter 222 are switchably conductive between the second low-noise amplification module 221 and the first low-noise amplification module 40 (or the first bypass trace 51), the reception path 22 further includes a first back-end switch 81, the second bypass trace 52, and a second back-end switch 82.

A fixed terminal of the first back-end switch 81 is electrically connected to the end of the first low-noise amplification module 40 (or the first bypass trace 51) away from the antenna radiator 30. In some embodiments, the fixed terminal of the first back-end switch 81 is electrically connected to the fixed terminal of the second front-end switch 72.

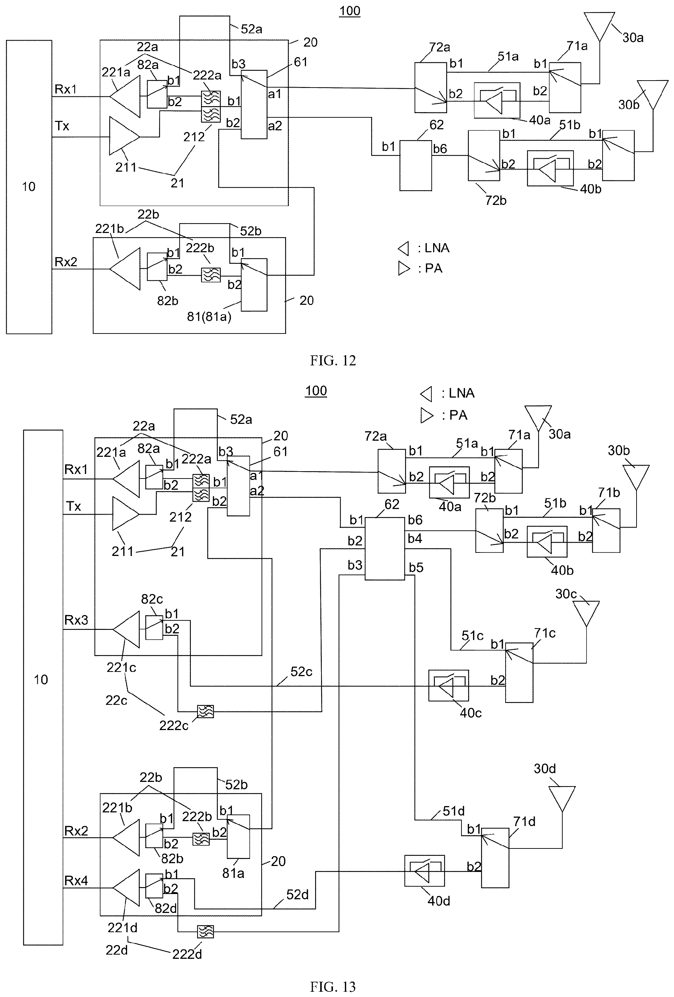

In some embodiments, the first back-end switch 81 may be the first antenna switch 61 as shown in FIG. 12. The fixed terminal of the first back-end switch 81 may be the first fixed terminal a1 of the first antenna switch 61.

A first selection terminal b1 of the first back-end switch 81 (a third selection terminal b3 of the first antenna switch 61) is electrically connected to an end of the second bypass trace 52. A second selection terminal b2 of the first back-end switch 81 (a first selection terminal b1 of the first antenna switch 61) is electrically connected to one end of the first filter 222.

In some embodiments, the second filter 212 of the transmission path 21 and the first filter 222 of the reception path 22 form a duplexer. The second selection terminal b2 of the first back-end switch 81 (the first selection terminal b1 of the first antenna switch 61) is electrically connected to a combined port of the duplexer.

The other end of the second bypass trace 52 is electrically connected to the first selection terminal b1 of the second back-end switch 82. The other end of the first filter 222 (a signal output end of a part (i.e., including the first filter 222) of the duplexer) is electrically connected to the second selection terminal b2 of the second back-end switch 82. The fixed terminal of the second back-end switch 82 is electrically connected to the reception port of the RF front-end module 20 or is electrically connected to the reception port of the RF front-end module 20 via the second low-noise amplification module 221.

A signal input end of the part (i.e., including the first filter 222) of the duplexer is electrically connected to the transmission port of the RF front-end module 20 via the power amplification module 211.

The control module is configured to control the on/off state of switches such as the first back-end switch 81 and the second back-end switch 82.

When the fixed terminal of the first back-end switch 81 is conductive with the first selection terminal b1, and the fixed terminal of the second back-end switch 82 is conductive with the first selection terminal b1, the second bypass trace 52 is conductive between the second low-noise amplification module 221 and the antenna radiator 30, and the first filter 222 is in the third bypass state.

When the fixed terminal of the first back-end switch 81 is conductive with the second selection terminal b2, and the fixed terminal of the second back-end switch 82 is conductive with the second selection terminal b2, the first filter 222 is conductive between the second low-noise amplification module 221 and the antenna radiator 30, and the first filter 222 is in the third working state.

In this implementation, in some embodiments, the transmission path 21 includes the aforementioned power amplification module 211 and the aforementioned second filter 212. The second filter 212 is configured to allow the reception signal of the antenna signal to pass and filter out reception signals of other frequency bands.

The transmission port of the RF transceiver module 10, the power amplification module 211, and the second filter 212 are electrically connected in sequence. The reception path 22 includes the second low-noise amplification module 221 and the first filter 222. The reception port of the RF transceiver module 10, the second low-noise amplification module 221, and the first filter 222 are electrically connected in sequence.

In some embodiments, the power amplification module 211 and the second low-noise amplification module 221 may be integrated into one chip or respectively arranged in two chips; and/or, the first filter 222 and the second filter 212 may be integrated into one duplexer or be two independent devices.

Referring to FIG. 10, in a second implementation where the first bypass trace 51 and the first low-noise amplification module 40 are switchably conductive between the reception path 22 and the antenna radiator 30, the radio frequency system 100 further includes a first front-end switch 71, the first bypass trace 51, and a first back-end switch 81. The first back-end switch 81 may be integrated into the RF front-end module 20, and the first back-end switch 81 may be part of the reception path 22. The first bypass trace 51 and the second bypass trace 52 may be the same trace.

A fixed terminal of the first front-end switch 71 is electrically connected to the antenna radiator 30. A first selection terminal b1 of the first front-end switch 71 is electrically connected to an end of the first bypass trace 51. A second selection terminal b2 of the first front-end switch 71 is electrically connected to an end of the first low-noise amplification module 40. The other end of the first bypass trace 51 is electrically connected to the first filter 222. A fixed terminal of the first back-end switch 81 is electrically connected to the second low-noise amplification module 221. The other end of the first low-noise amplification module 40 is electrically connected to a first selection terminal b1 of the first back-end switch 81. The other end of the first filter 222 is electrically connected to a second selection terminal b2 of the first back-end switch 81.

The control module is configured to control the on/off state of switches such as the first front-end switch 71 and the first back-end switch 81.

Referring to FIG. 11, when the fixed terminal of the first front-end switch 71 is conductive with the first selection terminal b1, and the fixed terminal of the first back-end switch 81 is conductive with the second selection terminal b2, the first bypass trace 51 and the first filter 222 are conductive between the second low-noise amplification module 221 and the antenna radiator 30. The first low-noise amplification module 40 is in the first bypass state, the first filter 222 is in the third working state, and the second low-noise amplification module 221 is in the second working state. Of course, in other implementations, the second low-noise amplification module 221 may be in the second bypass state.

Referring to FIG. 10, when the fixed terminal of the first front-end switch 71 is conductive with the second selection terminal b2, and the fixed terminal of the first back-end switch 81 is conductive with the first selection terminal b1, the first low-noise amplification module 40 is conductive between the second low-noise amplification module 221 and the antenna radiator 30. The first low-noise amplification module 40 is in the first working state, the second low-noise amplification module 221 is in the second working state, and the first filter 222 is in the third bypass state. Of course, in other implementations, the second low-noise amplification module 221 may be in the second bypass state.

In this implementation, the transmission path 21 includes the aforementioned power amplification module 211 and the aforementioned second filter 212. The second filter 212 is configured to allow the reception signal of the antenna signal to pass and filter out reception signals of other frequency bands.

The transmission port of the RF transceiver module 10, the power amplification module 211, and the second filter 212 are electrically connected in sequence. The reception path 22 includes the second low-noise amplification module 221 and the first filter 222. The reception port of the RF transceiver module 10, the second low-noise amplification module 221, and the first filter 222 are electrically connected in sequence.

In some embodiments, the power amplification module 211 and the second low-noise amplification module 221 may be integrated into one chip or respectively arranged in two chips; and/or, the first filter 222 and the second filter 212 may be integrated into one duplexer or be two independent devices.

In some embodiments, referring to FIG. 12, the at least one reception path 22 includes a first reception sub-path 22a and a second reception sub-path 22b.

The radio frequency system 100 further includes a first antenna switch 61. The first filter 222 of the first reception sub-path 22a and the second filter 212 of the transmission path 21 form a duplexer.

An end (combined port) of the duplexer is electrically connected to a first selection terminal b1 of the first antenna switch 61.

The second reception sub-path 22b is electrically connected to a second selection terminal b2 of the first antenna switch 61. A first fixed terminal a1 of the first antenna switch 61 is electrically connected to an end of a first low-noise amplification sub-module 40a. The other end of the first low-noise amplification sub-module 40a is electrically connected to a first sub-radiator 30a. A second fixed terminal a2 of the first antenna switch 61 is electrically connected to an end of a second low-noise amplification sub-module 40b. The other end of the second low-noise amplification sub-module 40b is electrically connected to a second sub-radiator 30b.

Specifically, referring to FIG. 12, the second low-noise amplification module 221 in the first reception sub-path 22a includes a first low-noise amplification sub-module 221a. The first filter 222 in the first reception sub-path 22a is a first sub-filter 222a. The first back-end switch 81 in the first reception sub-path 22a is the first antenna switch 61. The second back-end switch 82 in the first reception sub-path 22a is a first back-end sub-switch 82a. The second bypass trace 52 in the first reception sub-path 22a is a first back-end sub-trace 52a.

Specifically, referring to FIG. 12, the second low-noise amplification module 221 in the second reception sub-path 22b includes a second low-noise amplification sub-module 221b. The first filter 222 in the second reception sub-path 22b is a second sub-filter 222b. The first back-end switch 81 in the second reception sub-path 22b is a first back-end sub-switch 81a. The second back-end switch 82 in the second reception sub-path 22b is a second back-end sub-switch 82b. The second bypass trace 52 in the second reception sub-path 22b is a second back-end sub-trace 52b.

Specifically, referring to FIG. 12, a first reception port Rx1 of the RF transceiver module 10, the first low-noise amplification sub-module 221a, and the fixed terminal of the first back-end sub-switch 82a are electrically connected in sequence. The first selection terminal b1 of the first back-end sub-switch 82a, the first back-end sub-trace 52a, and the third selection terminal b3 of the first antenna switch 61 are electrically connected in sequence. The second selection terminal b2 of the first back-end sub-switch 82a, the part of the duplexer including the first sub-filter 222a, and the first selection terminal b1 of the first antenna switch 61 are electrically connected in sequence. A second reception port Rx2 of the RF transceiver module 10, the second low-noise amplification sub-module 221b, and the fixed terminal of the second back-end sub-switch 82b are electrically connected in sequence. The first selection terminal b1 of the second back-end sub-switch 82b, the second back-end sub-trace 52b, and the first selection terminal b1 of the first back-end sub-switch 81a are electrically connected in sequence. The second selection terminal b2 of the second back-end sub-switch 82b, the second sub-filter 222b, and the second selection terminal b2 of the first back-end sub-switch 81a are electrically connected in sequence. The fixed terminal of the first back-end sub-switch 81a is electrically connected to the second selection terminal b2 of the first antenna switch 61.

Specifically, referring to FIG. 12, the at least one first front-end switch 71 includes a third front-end sub-switch 71a and a fourth front-end sub-switch 71b. The at least one second front-end switch 72 includes a first front-end sub-switch 72a and a second front-end sub-switch 72b. The first bypass trace 51 includes a first front-end sub-trace 51a and a second front-end sub-trace 51b. The at least one antenna radiator 30 includes a first sub-radiator 30a and a second sub-radiator 30b. The at least one first low-noise amplification module 40 includes a first low-noise amplification sub-module 40a and a second low-noise amplification sub-module 40b.

Specifically, referring to FIG. 12, the first fixed terminal a1 of the first antenna switch 61 is electrically connected to the fixed terminal of the first front-end sub-switch 72a. The first selection terminal b1 of the first front-end sub-switch 72a, the first front-end sub-trace 51a, and the first selection terminal b1 of the third front-end sub-switch 71a are electrically connected in sequence. The second selection terminal b2 of the first front-end sub-switch 72a, the first low-noise amplification sub-module 40a, and the second selection terminal b2 of the third front-end sub-switch 71a are electrically connected in sequence. The fixed terminal of the third front-end sub-switch 71a is electrically connected to the first sub-radiator 30a.

Specifically, referring to FIG. 12, the second fixed terminal a2 of the first antenna switch 61 is electrically connected to the fixed terminal of the second front-end sub-switch 72b. The first selection terminal b1 of the second front-end sub-switch 72b, the second front-end sub-trace 51b, and the first selection terminal b1 of the fourth front-end sub-switch 71b are electrically connected in sequence. The second selection terminal b2 of the second front-end sub-switch 72b, the second low-noise amplification sub-module 40b, and the second selection terminal b2 of the fourth front-end sub-switch 71b are electrically connected in sequence. The fixed terminal of the fourth front-end sub-switch 71b is electrically connected to the second sub-radiator 30b.

When the first sub-radiator 30a (or the second sub-radiator 30b) is switched by the first antenna switch 61 to work with the transmission path 21 and the first reception sub-path 22a, the first sub-radiator 30a (or the second sub-radiator 30b) operates in an FDD frequency band. When the first sub-radiator 30a (or the second sub-radiator 30b) is switched by the first antenna switch 61 to work with the transmission path 21 and the second reception sub-path 22b, the first sub-radiator 30a (or the second sub-radiator 30b) operates in a TDD frequency band.

Herein, the transmission path 21, the first reception sub-path 22a, and the first antenna switch 61 may be integrated into one chip to form a primary transmit and receive front-end module. In some embodiments, the second reception sub-path 22b may form a diversity receive front-end module and be arranged in two independent chips together with the transmission path 21.

In some embodiments, referring to FIG. 13, on the basis that the reception path 22 includes the first reception sub-path 22a and the second reception sub-path 22b, the at least one reception path 22 further includes a third reception sub-path 22c and a fourth reception sub-path 22d. The at least one antenna radiator 30 further includes a third sub-radiator 30c and a fourth sub-radiator 30d. The at least one first low-noise amplification module 40 further includes a third low-noise amplification sub-module 40c and a fourth low-noise amplification sub-module 40d.

The radio frequency system 100 further includes a second antenna switch 62, a first front-end sub-switch 71c, and a second front-end sub-switch 71d.

The second fixed terminal a2 of the first antenna switch 61 is electrically connected to a first selection terminal b1 of the second antenna switch 62. The third reception sub-path 22c is electrically connected to a second selection terminal b2 of the second antenna switch 62. The fourth reception sub-path 22d is electrically connected to a third selection terminal b3 of the second antenna switch 62.

A fourth selection terminal b4 of the second antenna switch 62 is electrically connected to the first selection terminal b1 of the first front-end sub-switch 71c. The fixed terminal of the first front-end sub-switch 71c is electrically connected to the third sub-radiator 30c. The third reception sub-path 22c can be selectively electrically connected to an end of the third low-noise amplification sub-module 40c. The other end of the third low-noise amplification sub-module 40c is electrically connected to the second selection terminal b2 of the first front-end sub-switch 71c.

A fifth selection terminal b5 of the second antenna switch 62 is electrically connected to the first selection terminal b1 of the second front-end sub-switch 71d. The fixed terminal of the second front-end sub-switch 71d is electrically connected to the fourth sub-radiator 30d. The fourth reception sub-path 22d can be selectively electrically connected to an end of the fourth low-noise amplification sub-module 40d. The other end of the fourth low-noise amplification sub-module 40d is electrically connected to the second selection terminal b2 of the second front-end sub-switch 71d.

A sixth selection terminal b6 of the second antenna switch 62 is electrically connected to an end of the second low-noise amplification sub-module 40b.

Specifically, the first filter 222 of the third reception sub-path 22c is a third sub-filter 222c. The second low-noise amplification module 221 of the third reception sub-path 22c is a third low-noise amplification sub-module 221c. The first filter 222 of the fourth reception sub-path 22d is a fourth sub-filter 222d. The second low-noise amplification module 221 of the fourth reception sub-path 22d is a fourth low-noise amplification sub-module 221d.

The at least one first bypass trace 51 further includes a third front-end sub-trace 51c and a fourth front-end sub-trace 51d. The at least one second bypass trace 52 further includes a third back-end sub-trace 52c and a fourth back-end sub-trace 52d. The at least one second back-end switch 82 further includes a third back-end sub-switch 82c and a fourth back-end sub-switch 82d.

Specifically, a third reception port Rx3 of the RF transceiver module 10, the third low-noise amplification sub-module 221c, and the fixed terminal of the third back-end sub-switch 82c are electrically connected in sequence. The first selection terminal b1 of the third back-end sub-switch 82c, the third back-end sub-trace 52c, the third low-noise amplification sub-module 40c, and the second selection terminal b2 of the first front-end sub-switch 71c are electrically connected in sequence. The second selection terminal b2 of the third back-end sub-switch 82c, the third sub-filter 222c, the second selection terminal b2 of the second antenna switch 62, the third front-end sub-trace 51c, and the first selection terminal b1 of the first front-end sub-switch 71c are electrically connected in sequence. The fixed terminal of the first front-end sub-switch 71c is electrically connected to the third sub-radiator 30c.

Specifically, a fourth reception port Rx4 of the RF transceiver module 10, the fourth low-noise amplification sub-module 221d, and the fixed terminal of the fourth back-end sub-switch 82d are electrically connected in sequence. The first selection terminal b1 of the fourth back-end sub-switch 82d, the fourth back-end sub-trace 52d, the fourth low-noise amplification sub-module 40d, and the second selection terminal b2 of the second front-end sub-switch 71d are electrically connected in sequence. The second selection terminal b2 of the fourth back-end sub-switch 82d, the fourth sub-filter 222d, the third selection terminal b3 of the second antenna switch 62, the fourth front-end sub-trace 51d, and the first selection terminal b1 of the second front-end sub-switch 71d are electrically connected in sequence. The fixed terminal of the second front-end sub-switch 71d is electrically connected to the fourth sub-radiator 30d.

When the third sub-radiator 30c (or the fourth sub-radiator 30d) is switched by the second antenna switch 62 to work with the transmission path 21 and the third reception sub-path 22c, the third sub-radiator 30c (or the fourth sub-radiator 30d) operates in a TDD frequency band. In some embodiments, the third sub-radiator 30c serves as a primary MIMO antenna, and the fourth sub-radiator 30d serves as a diversity MIMO antenna. The transmission path 21 and the third reception sub-path 22c may be integrated into a primary front-end chip to form a primary transmit and receive front-end module. In some embodiments, the fourth reception sub-path 22d may form a diversity reception front-end module and be arranged in two independent chips together with the transmission path 21.

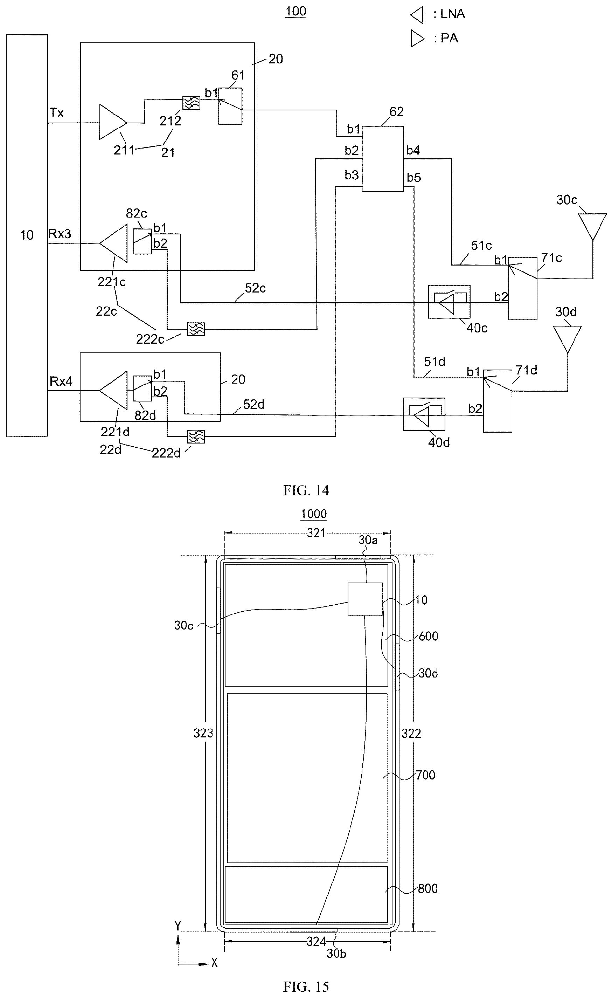

In some embodiments, referring to FIG. 14, in a scenario where the reception path 22 does not include the first reception sub-path 22a and the second reception sub-path 22b, the at least one reception path 22 includes a third reception sub-path 22c and a fourth reception sub-path 22d. The at least one antenna radiator 30 includes a third sub-radiator 30c and a fourth sub-radiator 30d. The at least one first low-noise amplification module 40 includes a third low-noise amplification sub-module 40c and a fourth low-noise amplification sub-module 40d.

The radio frequency system 100 further includes a second antenna switch 62, a first front-end sub-switch 71c, and a second front-end sub-switch 71d.

The transmission path 21 is electrically connected to a first selection terminal b1 of the second antenna switch 62. The third reception sub-path 22c is electrically connected to a second selection terminal b2 of the second antenna switch 62. The fourth reception sub-path 22d is electrically connected to a third selection terminal b3 of the second antenna switch 62.

A fourth selection terminal b4 of the second antenna switch 62 is electrically connected to the first selection terminal b1 of the first front-end sub-switch 71c. The fixed terminal of the first front-end sub-switch 71c is electrically connected to the third sub-radiator 30c. The third reception sub-path 22c can also be selectively electrically connected to an end of the third low-noise amplification sub-module 40c. The other end of the third low-noise amplification sub-module 40c is electrically connected to the second selection terminal b2 of the first front-end sub-switch 71c.

A fifth selection terminal b5 of the second antenna switch 62 is electrically connected to the first selection terminal b1 of the second front-end sub-switch 71d. The fixed terminal of the second front-end sub-switch 71d is electrically connected to the fourth sub-radiator 30d. The fourth reception sub-path 22d can also be selectively electrically connected to one end of the fourth low-noise amplification sub-module 40d. The other end of the fourth low-noise amplification sub-module 40d is electrically connected to the second selection terminal b2 of the second front-end sub-switch 71d.

Specifically, the first filter 222 of the third reception sub-path 22c is a third sub-filter 222c. The second low-noise amplification module 221 of the third reception sub-path 22c is a third low-noise amplification sub-module 221c. The first filter 222 of the fourth reception sub-path 22d is a fourth sub-filter 222d. The second low-noise amplification module 221 of the fourth reception sub-path 22d is a fourth low-noise amplification sub-module 221d.

The at least one first bypass trace 51 further includes a third front-end sub-trace 51c and a fourth front-end sub-trace 51d. The at least one second bypass trace 52 further includes a third back-end sub-trace 52c and a fourth back-end sub-trace 52d. The at least one second back-end switch 82 further includes a third back-end sub-switch 82c and a fourth back-end sub-switch 82d.

Specifically, a third reception port Rx3 of the RF transceiver module 10, the third low-noise amplification sub-module 221c, and the fixed terminal of the third back-end sub-switch 82c are electrically connected in sequence. The first selection terminal b1 of the third back-end sub-switch 82c, the third back-end sub-trace 52c, the third low-noise amplification sub-module 40c, and the second selection terminal b2 of the first front-end sub-switch 71c are electrically connected in sequence. The second selection terminal b2 of the third back-end sub-switch 82c, the third sub-filter 222c, the second selection terminal b2 of the second antenna switch 62, the third front-end sub-trace 51c, and the first selection terminal b1 of the first front-end sub-switch 71c are electrically connected in sequence. The fixed terminal of the first front-end sub-switch 71c is electrically connected to the third sub-radiator 30c.

Specifically, a fourth reception port Rx4 of the RF transceiver module 10, the fourth low-noise amplification sub-module 221d, and the fixed terminal of the fourth back-end sub-switch 82d are electrically connected in sequence. The first selection terminal b1 of the fourth back-end sub-switch 82d, the fourth back-end sub-trace 52d, the fourth low-noise amplification sub-module 40d, and the second selection terminal b2 of the second front-end sub-switch 71d are electrically connected in sequence. The second selection terminal b2 of the fourth back-end sub-switch 82d, the fourth sub-filter 222d, the third selection terminal b3 of the second antenna switch 62, the fourth front-end sub-trace 51d, and the first selection terminal b1 of the second front-end sub-switch 71d are electrically connected in sequence. The fixed terminal of the second front-end sub-switch 71d is electrically connected to the fourth sub-radiator 30d.

When the third sub-radiator 30c (or the fourth sub-radiator 30d) is switched by the second antenna switch 62 to work with the transmission path 21 and the third reception sub-path 22c, the third sub-radiator 30c (or the fourth sub-radiator 30d) operates in a TDD frequency band. In some embodiments, the third sub-radiator 30c serves as a primary MIMO antenna, and the fourth sub-radiator 30d serves as a diversity MIMO antenna. The transmission path 21 and the third reception sub-path 22c may be integrated into a primary front-end chip to form a primary transmit and receive front-end module. In some embodiments, the fourth reception sub-path 22d may form a diversity reception front-end module and be arranged in two independent chips together with the transmission path 21.

In other embodiments, the radio frequency system 100 may further include the first reception sub-path 22a and the third reception sub-path 22c. In other embodiments, the radio frequency system 100 may further include the first reception sub-path 22a and the fourth reception sub-path 22d.

In other embodiments, the radio frequency system 100 may further include any three of the first reception sub-path 22a, the second reception sub-path 22b, the third reception sub-path 22c, and the fourth reception sub-path 22d.

The first fixed terminal/second fixed terminal of the first antenna switch 61 can be switched to conduct with any one of the first selection terminal, the second selection terminal, and the third selection terminal. The fourth selection terminal/fifth selection terminal/sixth selection terminal of the second antenna switch 62 can be switched to conduct with any one of the first selection terminal, the second selection terminal, and the third selection terminal. Therefore, any one of the first sub-radiator 30a, the third sub-radiator 30c, the fourth sub-radiator 30d, and the second sub-radiator 30b can serve as a transmission antenna, and any one or more of the first sub-radiator 30a, the third sub-radiator 30c, the fourth sub-radiator 30d, and the second sub-radiator 30b can serve as a reception antenna.

In some embodiments, a length of a radio frequency transmission line between at least one of the antenna radiators 30 and the RF transceiver module 10 is greater than a preset length.

Specifically, when the number of antenna radiators 30 is multiple, a front-end first low-noise amplification module 40 may be set on the reception path 22 of one, some, or all of the multiple antenna radiators 30. In other words, the front-end first low-noise amplification module 40 may be added simultaneously or selectively on multiple reception paths 22 based on the insertion loss of the traces.

In some embodiments, when the length of the radio frequency transmission line between an antenna radiator 30 and the RF transceiver module 10 is greater than the preset length, the insertion loss on the signal reception link of this antenna radiator 30 is relatively large. In this case, a front-end first low-noise amplification module 40 and a bypass state of the first filter 222 may be set on the reception path 22 of one, some, or all of this antenna radiator 30 to improve the reception sensitivity when this antenna radiator 30 receives signals.

For example, referring to FIG. 15, FIG. 15 is a partial back view of the electronic device 1000 according to some embodiments of the present disclosure with the rear cover 400 removed. The bezel 320 includes a top bezel 321 and a bottom bezel 324 arranged opposite each other, and a first side bezel 322 and a second side bezel 323 connecting the top bezel 321 and the bottom bezel 324. The top bezel 321 is a side away from the ground when the user holds the electronic device 1000 vertically in portrait orientation, and the bottom bezel 324 is a side facing the ground when the user holds the electronic device 1000 vertically in portrait orientation. The first side bezel 322 is a left side when the user holds the electronic device 1000 vertically in portrait orientation. The second side bezel 323 is a right side when the user holds the electronic device 1000 vertically in portrait orientation. Of course, the first side bezel 322 may be the right side when the user holds the electronic device 1000, and the second side bezel 323 may be the left side when the user holds the electronic device 1000.

In some embodiments, the top bezel 321 is a straight bezel. The main middle parts of the first side bezel 322 and the second side bezel 323 are straight bezels, and their two ends are curved bezels. The bending angles of the curved bezels at both ends of the first side bezel 322 are both close to or 90°. The bending angles of the curved bezels at both ends of the second side bezel 323 are both close to or 90°. The curved bezels are arc-shaped. The bottom bezel 324 is a straight bezel.

Referring to FIG. 15, the number of antenna radiators 30 is four, referred to as the first sub-radiator 30a, the second sub-radiator 30b, the third sub-radiator 30c, and the fourth sub-radiator 30d. The first sub-radiator 30a, the fourth sub-radiator 30d, the third sub-radiator 30c, and the second sub-radiator 30b are respectively arranged on the top bezel 321, a part of the first side bezel 322 near the top bezel 321, a part of the second side bezel 323 near the top bezel 321, and the bottom bezel 324. Herein, the RF transceiver module 10 and the RF front-end module 20 are arranged on the mainboard. The distance between the antenna radiator 30 on the bottom bezel 324 and the mainboard 600 is relatively far. Therefore, the length of the RF transmission line between the antenna radiator 30 on the bottom bezel 324 and the RF front-end module 20 is relatively large. Based on this, a first low-noise amplification module 40 may be set between the antenna radiator 30 on the bottom bezel 324 and the RF front-end module 20 to reduce the large insertion loss caused by the long RF transmission line between the antenna radiator 30 and the RF front-end module 20, which would lead to reduced sensitivity.

The above is just an example. A first low-noise amplification module 40 may further be set between the antenna radiator 30 on a part of the first side bezel 322 near the top bezel 321 and the RF front-end module 20. A first low-noise amplification module 40 may further be set between the antenna radiator 30 on a part of the second side bezel 323 near the top bezel 321 and the RF front-end module 20 to reduce the large insertion loss caused by the long RF transmission line between the antenna radiator 30 and the RF front-end module 20, which would lead to reduced sensitivity.

In the implementations of the present disclosure, not only may a front-end first low-noise amplification module 40 be added simultaneously or selectively on multiple reception paths 22 based on the length of the impedance line or the trace insertion loss, but a front-end first low-noise amplification module 40 may also be set on all multiple reception paths 22, and then whether to switch to the sensitivity improvement scheme on each reception path 22 is determined based on sensitivity indicators. Herein, sensitivity indicators may refer to signal strength (Reference Signal Received Quality, RSRP).

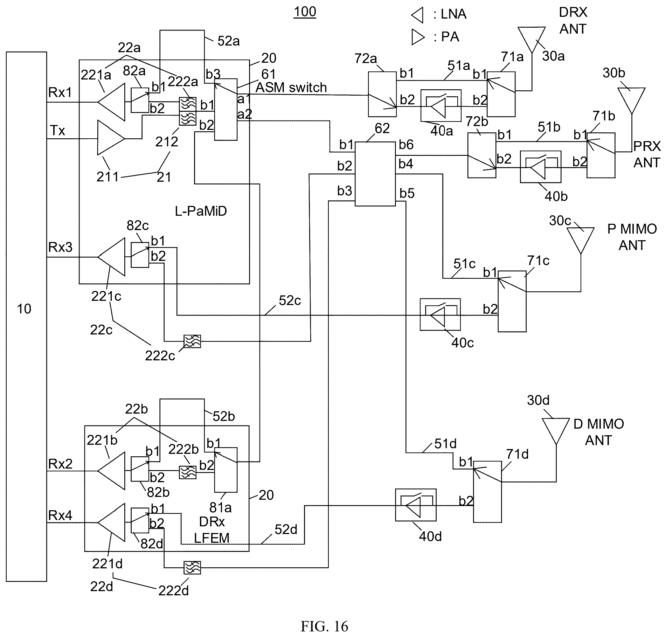

Referring to FIG. 16, the following illustrates several working modes of the radio frequency system 100 shown in FIG. 16. Of course, the working modes of the radio frequency system 100 include but are not limited to the following working modes.

For paths involving FDD frequency bands (such as the PRX primary and DRX diversity paths), scenarios where TDD and FDD frequency bands work separately need to be considered. Therefore, the architecture of the first front-end switch 71, the first low-noise amplification module 40, the first bypass trace 51, and the second front-end switch 72 is adopted (or a similar low-noise amplification module with a bypass mode is adopted; when transmitting, the first low-noise amplification module 40 is short-circuited; and the path containing the first low-noise amplification module 40 is connected only when receiving; the form is not limited).

When the path only has TDD frequency bands (such as the PRX MIMO and DRX MIMO paths), the circuit architecture of the first front-end switch 71, the first low-noise amplification module 40, and the first back-end switch 81 may be adopted. The fixed terminal of the first front-end switch 71 is connected to the antenna radiator 30 to realize the connection and bypass functions for the first low-noise amplification module 40. A first bypass trace 51 may be set in parallel with the first filter 222 at the backend to achieve the architecture where the front-end first low-noise amplification module 40 is used and reception bypasses the first filter 222.

When the receiver's interference signal detector provides interference detection functionality, and when the interference signal strength is greater than the first preset strength, the reception path 22 bypasses the first low-noise amplification module 40 via the first front-end switch 71 and the first bypass trace 51 (entering the first bypass state). The backend first filter 222 enters the third working state to filter out out-of-band noise, ensuring the receiver can demodulate correctly. When the receiver detects that the interference signal strength is less than or equal to the first preset strength, the first low-noise amplification module 40 enters the first working state, and the backend second bypass trace 52 places the first filter 222 in the third bypass state.

Specifically, for the primary/diversity antennas (first sub-radiator 30a and second sub-radiator 30b):

1. When working in FDD frequency bands: The first front-end switch 71 and second front-end switch 72 switch to conduct the first bypass trace 51, short-circuiting the first low-noise amplification module 40, placing it in the first bypass state. The first back-end switch 81 and second back-end switch 82 switch so the first filter 222 enters the third working state.

2. During TDD frequency band Tx transmission: The first front-end switch 71 and second front-end switch 72 switch to conduct the first bypass trace 51, short-circuiting the first low-noise amplification module 40, placing it in the first bypass state. The first back-end switch 81 and second back-end switch 82 switch so the first filter 222 enters the third working state.

3. During TDD frequency band Rx reception with interference: The first front-end switch 71 and second front-end switch 72 switch to conduct the first bypass trace 51, short-circuiting the first low-noise amplification module 40, placing it in the first bypass state. The first back-end switch 81 and second back-end switch 82 switch so the first filter 222 enters the third working state.

4. During TDD frequency band Rx reception without interference: The first front-end switch 71 and second front-end switch 72 switch to conduct the first low-noise amplification module 40, placing it in the first working state. The first back-end switch 81 and second back-end switch 82 switch so the first filter 222 enters the third bypass state.

For the MIMO paths (third sub-radiator 30c and fourth sub-radiator 30d):

1. When working in FDD frequency bands: The first front-end switch 71 switches to conduct the first bypass trace 51, short-circuiting the first low-noise amplification module 40, placing it in the first bypass state. The first back-end switch 81 and second back-end switch 82 switch so the first filter 222 enters the third working state.

2. During TDD frequency band Tx transmission: The first front-end switch 71 switches to conduct the first bypass trace 51, short-circuiting the first low-noise amplification module 40, placing it in the first bypass state. The first back-end switch 81 and second back-end switch 82 switch so the first filter 222 enters the third working state.

3. During TDD frequency band Rx reception with interference: The first front-end switch 71 switches to conduct the first bypass trace 51, short-circuiting the first low-noise amplification module 40, placing it in the first bypass state. The first back-end switch 81 and second back-end switch 82 switch so the first filter 222 enters the third working state.

4. During TDD frequency band Rx reception without interference: The first front-end switch 71 switches to conduct the first low-noise amplification module 40, placing it in the first working state. The first back-end switch 81 and second back-end switch 82 switch so the first filter 222 enters the third bypass state.

In one scenario: the path where the first sub-radiator 30a is located is the DRX diversity reception path 22; the path where the second sub-radiator 30b is located is the PRX primary reception path 22; the path where the third sub-radiator 30c is located is the P MIMO reception path 22; the path where the fourth sub-radiator 30d is located is the D MIMO reception path 22, the RF front-end module 20 includes a first front-end module, which is an L-PAMiD, used for transmission and primary reception, and the RF front-end module 20 further includes a second front-end module, which is a DRX LFEM, used for diversity reception.

PRX Primary Reception Path: from the second sub-radiator 30b, entering the L-PAMiD internally via the second antenna switch 62, being switched by the ASM RF switch (the aforementioned first antenna switch 61) inside the L-PAMiD to the Rx SAW reception path 22 (the aforementioned first reception sub-path 22a), entering the second low-noise amplification module 221 for signal amplification, and then entering the receiver for demodulation.

DRX Diversity Reception Path: from the first sub-radiator 30a, being directly connected to the antenna port of the L-PAMiD, led out by the ASM switch (the aforementioned first antenna switch 61) inside the L-PAMiD, then connected to the DRX LFEM, selecting the SAW filter path via the ASM switch (the aforementioned first back-end switch 81) inside the DRX LFEM, entering the second low-noise amplification module 221 for signal amplification, and then entering the receiver for demodulation.

PRX MIMO Reception Path: from the third sub-radiator 30c, being connected to the SAW filter via the second antenna switch 62 for filtering, then entering the L-PAMiD internally, entering the second low-noise amplification module 221 for signal amplification, and then entering the receiver for demodulation.

DRX MIMO Reception Path: from the fourth sub-radiator 30d, being connected to the SAW filter via the second antenna switch 62 for filtering, then entering the DRX L-FEM internally, entering the second low-noise amplification module 221 for signal amplification, and then entering the receiver for demodulation.

The radio frequency system 100 provided in the present disclosure, by setting a front-end first low-noise amplification module 40 close to the antenna radiator 30, may reduce the noise figure of the overall noise system. For the reception path 22, by bypassing the filter, path insertion loss may be optimized. By simultaneously optimizing path insertion loss and the overall noise system, the sensitivity index of the reception path 22 may be greatly improved.

The radio frequency system 100 provided in the present disclosure includes an RF transceiver module 10, an RF front-end module 20, at least one antenna radiator 30, and at least one first low-noise amplification module 40. The RF front-end module 20 includes at least one transmission path 21 and at least one reception path 22. An end of the transmission path 21 is electrically connected to the transmission port of the RF transceiver module 10, and an end of the reception path 22 is electrically connected to the reception port of the RF transceiver module 10. The first low-noise amplification module 40 is connected between the antenna radiator 30 and the reception path 22. When the first low-noise amplification module 40 is in the first working state, it is conductive between the antenna radiator 30 and the reception path 22. When the first low-noise amplification module 40 is in the first bypass state, it is short-circuited between the antenna radiator 30 and the reception path 22. This design may facilitate, in the first working state, placing the first low-noise amplification module 40 close to the antenna radiator 30 to reduce the noise figure, thereby improving the signal sensitivity of the reception path 22.

Although the embodiments of the present disclosure have been shown and described above, it should be understood that these embodiments are exemplary and should not be construed as limiting the present disclosure. Those skilled in the art can make changes, modifications, replacements, and variations to the above embodiments within the scope of the present disclosure. These improvements and modifications are also considered to be within the scope of the present disclosure.

**Claims**

1. A radio frequency system (100), **characterized by** comprising:

   a radio frequency transceiver module (10);
   a radio frequency front-end module (20), comprising at least one transmission path (21) and at least one reception path (22); wherein an end of each transmission path (21) is electrically connected to a corresponding transmission port (Tx) of the radio frequency transceiver module (10), and an end of each reception path (22) is electrically connected to a corresponding reception port (Rx) of the radio frequency transceiver module (10);
   at least one antenna radiator (30); and
   at least one first low-noise amplification module (40); wherein each first low-noise amplification module (40) is connected between a corresponding antenna radiator (30) and a corresponding reception path (22); in a case where the first low-noise amplification module (40) is in a first working state, the first low-noise amplification module (40) is conductive between the corresponding antenna radiator (30) and the corresponding reception path (22); in a case where the first low-noise amplification module (40) is in a first bypass state, the first low-noise amplification module (40) is short-circuited between the corresponding antenna radiator (30) and the corresponding reception path (22).

2. The radio frequency system (100) according to claim 1, wherein at least one of the following is satisfied:

in a case where the radio frequency system (100) supports an FDD frequency band, the first low-noise amplification module (40) is in the first bypass state;
in a case where the radio frequency system (100) supports a TDD frequency band and is transmitting an antenna signal, the first low-noise amplification module (40) is in the first bypass state; and
in a case where the radio frequency system (100) supports a TDD frequency band and is receiving an antenna signal, the first low-noise amplification module (40) is in the first working state.

3. The radio frequency system (100) according to claim 1, wherein in a case where the radio frequency system (100) supports a TDD frequency band and is receiving an antenna signal, and an interference signal strength is less than or equal to a first preset strength, the first low-noise amplification module (40) is in the first working state.

4. The radio frequency system (100) according to claim 3, wherein the first low-noise amplification module (40) has a first gain mode and a second gain mode, an operating gain of the second gain mode being greater than an operating gain of the first gain mode; in a case where the radio frequency system (100) supports the TDD frequency band and is receiving the antenna signal, and the interference signal strength is less than or equal to the first preset strength, the first low-noise amplification module (40) operates in the second gain mode.

5. The radio frequency system (100) according to claim 3, wherein each reception path (22) comprises at least one second low-noise amplification module (221); an end of each second low-noise amplification module (221) is electrically connected to a corresponding reception port (Rx) of the radio frequency transceiver module (10), and another end of the second low-noise amplification module (221) is electrically connected to an end of a corresponding first low-noise amplification module (40) away from a corresponding antenna radiator (30);

in a case where the corresponding first low-noise amplification module (40) is in the first working state, the second low-noise amplification module (221) is in a second working state or a second bypass state;
in a case where the corresponding first low-noise amplification module (40) is in the first bypass state, the second low-noise amplification module (221) is in the second working state.

6. The radio frequency system (100) according to claim 5, wherein the reception path (22) further comprises at least one first filter (222); where each first filter (222) is electrically connected between a corresponding second low-noise amplification module (221) and a corresponding first low-noise amplification module (40).

7. The radio frequency system (100) according to any one of claims 1 to 6, wherein the radio frequency system (100) further comprises a first front-end switch (71), a first bypass trace (51), and a second front-end switch (72); a fixed terminal of the first front-end switch (71) is electrically connected to a corresponding antenna radiator (30), a first selection terminal of the first front-end switch (71) is electrically connected to an end of the first bypass trace (51), and a second selection terminal of the first front-end switch (71) is electrically connected to an end of a corresponding first low-noise amplification module (40); another end of the first bypass trace (51) is electrically connected to a first selection terminal of the second front-end switch (72), another end of the corresponding first low-noise amplification module (40) is electrically connected to a second selection terminal of the second front-end switch (72), and a fixed terminal of the second front-end switch (72) is electrically connected to the radio frequency front-end module (20).

8. The radio frequency system (100) according to claim 6, wherein the radio frequency system (100) further comprises a first front-end switch (71), a first bypass trace (51), and a first back-end switch (81); a fixed terminal of the first front-end switch (71) is electrically connected to a corresponding antenna radiator (30), a first selection terminal of the first front-end switch (71) is electrically connected to an end of the first bypass trace (51), and a second selection terminal of the first front-end switch (71) is electrically connected to an end of a corresponding first low-noise amplification module (40); another end of the first bypass trace (51) is electrically connected to a corresponding first filter (222), a fixed terminal of the first back-end switch (81) is electrically connected to a corresponding second low-noise amplification module (221), another end of the corresponding first low-noise amplification module (40) is electrically connected to a first selection terminal of the first back-end switch (81), and another end of the corresponding first filter (222) is electrically connected to a second selection terminal of the first back-end switch (81).

9. The radio frequency system (100) according to claim 6, wherein the reception path (22) further comprises a first back-end switch (81), a second bypass trace (52), and a second back-end switch (82); a fixed terminal of the first back-end switch (81) is electrically connected to an end of a corresponding first low-noise amplification module (40) away from a corresponding antenna radiator (30), a first selection terminal of the first back-end switch (81) is electrically connected to an end of the second bypass trace (52), and a second selection terminal of the first back-end switch (81) is electrically connected to an end of a corresponding first filter (222); another end of the second bypass trace (52) is electrically connected to a first selection terminal of the second back-end switch (82), another end of the corresponding first filter (222) is electrically connected to a second selection terminal of the second back-end switch (82), and a fixed terminal of the second back-end switch (82) is electrically connected to a corresponding reception port (Rx) of the radio frequency front-end module (20).

10. The radio frequency system (100) according to any one of claims 1 to 6, 8, and 9, wherein each transmission path (21) comprises a power amplification module (211) and a second filter (212); a corresponding transmission port (Tx) of the radio frequency transceiver module (10), the power amplification module (211), and the second filter (212) are sequentially electrically connected; a corresponding reception path (22) comprises a second low-noise amplification module (221) and a first filter (222); a corresponding reception port (Rx) of the radio frequency transceiver module (10), the second low-noise amplification module (221), and the first filter (222) are sequentially electrically connected; at least one of the following is satisfied:

the power amplification module (211) and the second low-noise amplification module (221) are integrated in one chip or respectively disposed in two chips; and
the first filter (222) and the second filter (212) are integrated as a duplexer or are two separate devices, respectively.

11. The radio frequency system (100) according to any one of claims 1 to 6 and 9, wherein the at least one reception path (22) is a set of reception sub-paths comprising a first reception sub-path (22a) and a second reception sub-path (22b), the at least one antenna radiator (30) is a set of sub-radiators comprising a first sub-radiator (30a) and a second sub-radiator (30b), and the at least one first low-noise amplification module (40) is a set of low-noise amplification sub-modules comprising a first low-noise amplification sub-module (40a) and a second low-noise amplification sub-module (40b);

the radio frequency system (100) further comprises a first antenna switch (61), and a first filter (222) of the first reception sub-path (22a) and a second filter (212) of the transmission path (21) form a duplexer;
an end of the duplexer is electrically connected to a first selection terminal of the first antenna switch (61), the second reception sub-path (22b) is electrically connected to a second selection terminal of the first antenna switch (61), and a first fixed terminal of the first antenna switch (61) is electrically connected to one end of the first low-noise amplification sub-module (40a); another end of the first low-noise amplification sub-module (40a) is electrically connected to the first sub-radiator (30a), a second fixed terminal of the first antenna switch (61) is electrically connected to an end of the second low-noise amplification sub-module (40b), and another end of the second low-noise amplification sub-module (40b) is electrically connected to the second sub-radiator (30b).

12. The radio frequency system (100) according to claim 11, wherein the set of reception sub-paths further comprises a third reception sub-path (22c) and a fourth reception sub-path (22d), the set of sub-radiators further comprises a third sub-radiator (30c) and a fourth sub-radiator (30d), and the set of low-noise amplification sub-modules further comprises a third low-noise amplification sub-module (40c) and a fourth low-noise amplification sub-module (40d);

the radio frequency system (100) further comprises a second antenna switch (62), a first front-end sub-switch (71c), and a second front-end sub-switch (71d);
the second fixed terminal of the first antenna switch (61) is electrically connected to a first selection terminal of the second antenna switch (62); the third reception sub-path (22c) is electrically connected to a second selection terminal of the second antenna switch (62); the fourth reception sub-path (22d) is electrically connected to a third selection terminal of the second antenna switch (62);
a fourth selection terminal of the second antenna switch (62) is electrically connected to a first selection terminal of the first front-end sub-switch (71c), and a fixed terminal of the first front-end sub-switch (71c) is electrically connected to the third sub-radiator (30c); the third reception sub-path (22c) is capable of being electrically connected to one end of the third low-noise amplification sub-module (40c), and another end of the third low-noise amplification sub-module (40c) is electrically connected to a second selection terminal of the first front-end sub-switch (71c);

a fifth selection terminal of the second antenna switch (62) is electrically connected to a first selection terminal of the second front-end sub-switch (71d), and a fixed terminal of the second front-end sub-switch (71d) is electrically connected to the fourth sub-radiator (30d); the fourth reception sub-path (22d) is capable of being electrically connected to an end of the fourth low-noise amplification sub-module (40d), and another end of the fourth low-noise amplification sub-module (40d) is electrically connected to a second selection terminal of the second front-end sub-switch (71d);

a sixth selection terminal of the second antenna switch (62) is electrically connected to an end of the second low-noise amplification sub-module.

13. The radio frequency system (100) according to any one of claims 1 to 6 and 8, wherein the at least one reception path (22) is a set of reception sub-paths comprising a third reception sub-path (22c) and a fourth reception sub-path (22d), the at least one antenna radiator (30) is a set of sub-radiators comprising a third sub-radiator (30c) and a fourth sub-radiator (30d), and the at least one first low-noise amplification module (40) is a set of low-noise amplification sub-modules comprising a third low-noise amplification sub-module (40c) and a fourth low-noise amplification sub-module (40d);

the radio frequency system (100) further comprises a second antenna switch (62), a first front-end sub-switch (71c), and a second front-end sub-switch (71d);

the transmission path (21) is electrically connected to a first selection terminal of the second antenna switch (62);

the third reception sub-path (22c) is electrically connected to a second selection terminal of the second antenna switch (62); the fourth reception sub-path (22d) is electrically connected to a third selection terminal of the second antenna switch (62);

a fourth selection terminal of the second antenna switch (62) is electrically connected to a first selection terminal of the first front-end sub-switch (71c), and a fixed terminal of the first front-end sub-switch (71c) is electrically connected to the third sub-radiator (30c); the third reception sub-path (22c) is capable of being electrically connected to an end of the third low-noise amplification sub-module (40c), and another end of the third low-noise amplification sub-module (40c) is electrically connected to a second selection terminal of the first front-end sub-switch;

a fifth selection terminal of the second antenna switch (62) is electrically connected to a first selection terminal of the second front-end sub-switch (71d), and a fixed terminal of the second front-end sub-switch (71d) is electrically connected to the fourth sub-radiator (30d); the fourth reception sub-path (22d) is capable of being electrically connected to an end of the fourth low-noise amplification sub-module (40d), and another end of the fourth low-noise amplification sub-module (40d) is electrically connected to a second selection terminal of the second front-end sub-switch (71d).

14. The radio frequency system (100) according to any one of claims 1 to 6, 8, 9, and 12, wherein for each of at least one of the at least one antenna radiator (30), a length of a radio frequency transmission line between the antenna radiator (30) and the radio frequency transceiver module (10) is greater than a preset length.

15. An electronic device (1000), comprising the radio frequency system (100) according to any one of claims 1 to 14.

FIG. 1

FIG. 2

100

FIG. 3

100

◁ : LNA
▷ : PA

FIG. 4

100

◁ : LNA
▷ : PA

FIG. 5

FIG. 6

FIG. 7

FIG. 8

FIG. 9

FIG. 10

FIG. 11

FIG. 12

FIG. 13

FIG. 14

FIG. 15

FIG. 16

Europäisches
Patentamt
European
Patent Office
Office européen
des brevets

# EUROPEAN SEARCH REPORT

**Application Number**

EP 25 22 7723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 211 880 379 U (VIVO MOBILE COMMUNICATION CO LTD) 6 November 2020 (2020-11-06) * paragraphs [0066] - [0098]; figures 10-12 * | 1-15 | INV. H04B1/18 H04B1/401 |
| X | KR 2010 0008290 A (SEOUL COMMTECH CO LTD [KR]) 25 January 2010 (2010-01-25) * paragraphs [0014] - [0034]; figure 2 * | 1-15 | |
| X | KR 100 871 469 B1 (SEOUL COMMTECH CO LTD [KR]) 3 December 2008 (2008-12-03) * paragraphs [0043] - [0070]; claims 1-3; figure 1 * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 26 March 2026 | Ciccarese, Corrado |

EPO FORM 1503 03.82 (P04C01)

## ANNEX TO THE EUROPEAN SEARCH REPORT
## ON EUROPEAN PATENT APPLICATION NO.

EP 25 22 7723

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| CN 211880379 U | 06-11-2020 | NONE | |
| KR 20100008290 A | 25-01-2010 | NONE | |
| KR 100871469 B1 | 03-12-2008 | NONE | |

EPO FORM P0459

For more details about this annex : see Official Journal of the European Patent Office, No. 12/82